# EUROPÄISCHE PATENTANMELDUNG

(11) **EP 2 071 462 A1**
(43) Veröffentlichungstag der Anmeldung: **17.06.2009**
(21) Anmeldenummer: 07023605.4
(22) Anmeldetag: 05.12.2007
(51) Int. Cl.: G06F 11/07, G06Q 40/00

(54) **Verfahren zur Verifikation von Daten**

(71) Anmelder: Walkenfort, Carsten, 70192 Stuttgart (DE); Prasser, Wilhelm, 81827 München (DE)
(72) Erfinder: Prasser Wilhelm, 81827 München (DE); Walkenfort Carsten, 70192 Stuttgart (DE)
(74) Vertreter: Hössle Kudlek & Partner

(57) **Zusammenfassung**

Es werden ein Verfahren und ein System zur Verifikation von Daten vorgestellt. Bei dem Verfahren ist vorgesehen, dass erfasste Daten mit Plausibilisierungsdaten verknüpft werden.

## Beschreibung

Die Erfindung betrifft ein Verfahren und ein System zur Verifikation von Daten. Weiterhin betrifft die Erfindung ein Computerprogramm und ein Computerprogrammprodukt zur Durchführung des beschriebenen Verfahrens.

Die Beurteilung elektronisch gespeicherter Daten ist aufgrund vielfältigerer Manipulationsmöglichkeiten der Daten problematisch. Es ist daher bislang kaum möglich, die Authentizität elektronischer Daten, da diese zu beliebigen Zeitpunkten geändert werden können, sicherzustellen. So können elektronische gespeicherte Daten mit vielfältigen Programmen bearbeitet werden, um auf diese Weise ein aufgenommenes Bild zu bearbeiten.

Selbst bei der Erzeugung der Daten gibt es mehrere Möglichkeiten der Ineinflussnahme, so dass nicht gewährleistet werden kann, dass Informationen, die in Form elektronischer Daten vorliegen, tatsächlichen Begebenheiten entsprechen.

Dies stellt bspw. im Versicherungsgewerbe ein Problem dar, da Schadensmeldungen von Versicherten nicht ausschließlich aufgrund übermittelter, elektronischer Daten bearbeitet werden können. Derzeit ist es bisher immer notwendig, dass ein Gutachter oder ein Arbeitnehmer der Versicherung vor Ort den Schaden besichtigt. Dies führt zu erheblichen Kosten und zu Verzögerung bei der Verwaltung von Schadensmeldungen.

Aber auch auf anderen Gebieten wäre eine sichere Möglichkeit zur Verifikation von Daten, insbesondere von elektronischen Daten, die Bilddaten, Tondaten usw. sein können, hilfreich.

Das erfindungsgemäße Verfahren zur Verifikation von Daten sieht vor, dass Daten erfasst und mit Plausibilisierungsdaten verknüpft werden und anschließend die Daten anhand der verknüpften Plausibilisierungsdaten verifiziert werden.

In Ausgestaltung ist vorgesehen, dass die erfassten Daten und die Plausibilisierungsdaten bei der Verknüpfung zu einem vor Veränderungen gesicherten Datenpaket zusammengefasst werden. Dabei bedeutet ein vor Veränderungen gesichertes Datenpaket, dass eine Bearbeitung dieses Datenpakets nicht möglich ist, oder dass eine nachträgliche Veränderung bzw. Bearbeitung des Datenpakets offensichtlich wird.

Als Plausibilisierungsdaten können bspw. Wetterdaten, Zeitdaten und/oder Ortsdaten verwendet werden.

Aufgrund der mit den Daten verknüpften Plausibilisierungsdaten kann somit sichergestellt werden, dass die Daten tatsächlichen Gegebenheiten entsprechen bzw. diese beschreiben. So ermöglichen bspw. Orts- und Zeitdaten, dass bspw. ein Bild tatsächlich am genannten Ort zu der bestimmten Zeit aufgenommen wurde. Da die Daten typischerweise zu einem vor Veränderungen gesicherten Datenpaket zusammengefasst werden, ist gewährleistet, dass keine nachträglichen Manipulationen vorgenommen wurden.

Das erfindungsgemäße Verfahren zur Bearbeitung von Daten sieht vor, dass Daten erfasst und mit Plausibilisierungsdaten verknüpft werden. Dieses Verfahren wird z.B. bei einem Versicherungsnehmer durchgeführt, der Daten zu einem Schadensfall aufnimmt. So kann er mit einer Kamera oder einem Mobiltelefon mit Kamerafunktion ein Bild eines beschädigten Fahrzeugs aufnehmen. Die erfassten Daten zu dem Bild werden mit Plausibilisierungsdaten automatisch verknüpft, ohne dass der Versicherungsnehmer oder irgendeine andere Person die Möglichkeit einer Manipulation hat. Die mit den Plausibilisierungsdaten zu einem Datenpaket verknüpften Daten können dann über einen Dienstleister, der eine Plausibilisierung durchführt, zu der Versicherung übertragen werden.

Auch wenn an dieser Stelle eine mögliche Anwendung im Versicherungsbereich beschrieben ist, ist zu beachten, dass die Erfindung in unterschiedlichen technischen und wirtschaftlichen Bereichen zum Einsatz kommen kann.

Das erfindungsgemäße Verfahren zur Auswertung von mit Plausibilisierungsdaten verknüpften Daten sieht vor, dass die Daten anhand der Plausibilisierungsdaten verifiziert werden. Dieses Verfahren wird bspw. bei der Versicherung durchgeführt, die eine Schadensmeldung von einem Versicherungsnehmer erhalten hat. Anhand der mit den übermittelten Daten verknüpften Plausibilisierungsdaten kann überprüft werden, ob die erhaltenen Daten einer tatsächlichen Gegebenheit entsprechen.

Die erfindungsgemäße Plattform zur Verifikation von Daten dient insbesondere zur Durchführung eines vorstehend beschriebenen Verfahrens und weist eine Einheit zur Erfassung elektronischer Daten, eine erste Einrichtung zur Erzeugung von Plausibilisierungsdaten, eine zweite Einrichtung zur Verknüpfung der erfassten elektronischen Daten mit den Plausibilisierungsdaten und eine Recheneinrichtung zur Verifikation der erfassten Daten anhand der mit diesen verknüpften Plausibilisierungsdaten auf.

Die erfindungsgemäße Plattform bzw. die Anordnung, die durch die Plattform gegeben ist, dient somit zur Erfassung von Informationen und Inhalten bzw. Content. Dieser Content wird mit weiteren Informationen, wie bspw. Wetter-, Orts- und Uhrzeitinformationen, aufbereitet und zur Verfügung gestellt. Der erfasste Content wird auf diese Weise in einen gesicherten und ggf. unveränderbaren Zustand versetzt. Des weiteren können die Inhalte der geladenen Daten mittels einer Verifikation auf Echtheit geprüft werden. Manipulationen von Inhalten, bspw. durch Bildbearbeitung, können ausgeschlossen werden.

Autorisierte Benutzer können Content über diese Plattform an registrierte Unternehmen übertragen. Die Zielgruppe ist daher weder bei den Nutzern noch bei den Unternehmen eingeschränkt. Zudem kann der Datenfluss auch von den Unternehmen, bspw. Versicherungen, zurück zu den Benutzern erfolgen.

Dem Benutzer wird ein einfaches Erfassen von Content, bspw. eine Schadensanmeldung, ermöglicht. Diese kann dann elektronisch an die Versicherung übertragen werden, ohne dass weitere Dokumente notwendig werden. Über eine eindeutige Identifikation (ID) kann sich der Benutzer an der Plattform authentisieren. Dies erfolgt üblicherweise über eine einmalige Registrierung über das Internet oder das Unternehmen sendet diese ID direkt an den Benutzer. Daher erfolgt eine einfache Übertragung der Daten über die Plattform. Bei den Unternehmen erfolgt eine Automatisierung von bspw. Schadensmeldungen und eine Verifikation der erhaltenen Daten mittels eines Plausibilitätschecks. Alternativ kann vorgesehen sein, dass der Benutzer die Daten an einen Dienstleister schickt, der eine Plausibilisierung der Daten vornimmt, bevor er diese, ggf. mit weiteren Informationen, an die Versicherung weitergibt.

Die Authentisierung des Benutzers kann über seine Mobilfunknummer oder e-Mail-Adresse erfolgen. Nach erfolgter Authentisierung wird die graphische Benutzerschnittstelle einschließlich der Nutzerinformationen, wie bspw. Name, Benutzer-ID usw., zum Mobilfunktelefon übertragen. Die graphische Benutzerschnittstelle passt sich dem Mobilfunkmodell an und analysiert die zur reibungslosen Nutzung benötigten Parameter am Endgerät. Es werden Informationen gespeichert und es erfolgt eine Rücklieferung der Benutzerdaten vom Endgerät. Anschließend erfolgt ein Freischalten des Dienstes durch Bestätigung an den Benutzer.

Die vorgestellte Plattform soll zur Erfassung von Content dienen, der von autorisierten Benutzern über diese Plattform an registrierte Unternehmen übertragen kann.

Der Content wird mit weiteren Informationen, wie bspw. Wetter, Lokation, Uhrzeit usw., angereichert bzw. verknüpft. Weitere zu übermittelnde Daten betreffen: was ist passiert, wann, wo, Schadenshöhe, Polizeibericht, Fotos, Beteiligte, Zeugen, usw.

Die erfassten Daten werden mit weiteren Daten aufgewertet und/oder angereichert, wie bspw. Wetter, Uhrzeit und Position. Dazu können vorhandene Lieferanten eingesetzt werden. Wetterinformationen können bspw. über Internetdienstleister geliefert werden. Die Position kann mit einem GPS-fähigen Mobilfunktelefon oder auch von der Basisstation in der das Mobilfunktelefon eingewählt ist, also vom Provider, bereitgestellt werden. Diese Inhalte werden mittels eines AES-Algorithmus und eines individuellen 19-stelligen Hex Codes verschlüsselt und sind damit unveränderbar. Die zusätzlichen Informationen können je nach Anforderung des Auftraggebers flexibel gehandhabt werden.

Bei der Plausibilisierung der Daten wird bspw. ausgenutzt, dass in der Natur verschiedene Regelmäßigkeiten nicht vorkommen können. Manipulationen werden dann bspw. durch Abtasten bzw. Scannen der Daten nachgewiesen.

Zur Verifikation der Daten werden diese an das jeweilige Unternehmen übertragen. Dabei erfolgt regelmäßig nur ein Prüfsummencheck. Die Übertragung kann je nach Anforderungen des Auftraggebers individuell erfolgen. Die übertragenen Inhalte sind jedoch für den Auftraggeber unveränderbar einschließlich der integrierten Zusatzinformationen.

Die erfindungsgemäße Plattform stellt in Ausgestaltung eine offene Schnittstelle für Kunden bereit, die bspw. XML-, pdf- oder auch zip-Daten austauschen kann.

Die erfindungsgemäße Vorrichtung zur Erfassung elektronischer Daten dient insbesondere zur Durchführung eines vorstehend beschriebenen Verfahrens nach Anspruch 6 und weist eine Einheit zur Erfassung elektronischer Daten und eine erste Einrichtung zur Erzeugung von Plausibilisierungsdaten und eine zweite Einrichtung zur Verknüpfung der erfassten elektronischen Daten mit den Plausibilisierungsdaten auf.

Diese Vorrichtung kann bspw. als Mobilfunktelefon ausgebildet sein, das über eine zusätzliche Kamerafunktion verfügt. Plausibilisierungsdaten, wie bspw. Ortsinformationen, können über ein GPS-Modul erhalten werden.

Die erfindungsgemäße Vorrichtung zur Auswertung erfasster Daten dient insbesondere zur Durchführung eines Verfahrens gemäß Anspruch 7 und umfasst eine Recheneinrichtung zur Verifikation der erfassten Daten anhand von mit diesen verknüpften Plausibilisierungsdaten.

Das erfindungsgemäße Computerprogramm umfasst Programmcodemittel, um alle Schritte eines Verfahrens nach einem der Ansprüche 1 bis 7 durchzuführen, wenn das Computerprogramm auf einem Computer oder einer entsprechenden Recheneinrichtung ausgeführt wird.

Das erfindungsgemäße Computerprogramm umfasst eben diese Programmcodemittel, die auf einem computerlesbaren Datenträger gespeichert sind.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung dargestellt und wird im folgenden unter Bezugnahme auf die Zeichnung ausführlich beschrieben.
- Figur 1: zeigt eine Ausführungsform der erfindungsgemäßen Plattform in einer schematischen Darstellung.
- Figur 2: zeigt eine Ausführungsform des erfindungsgemäßen Verfahrens in einem Flussdiagramm.

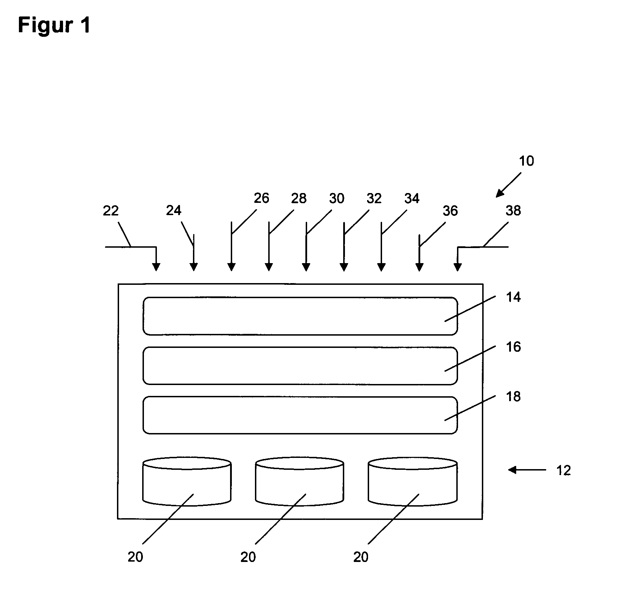

In Figur 1 ist eine erfindungsgemäße Plattform, insgesamt mit der Bezugsziffer 10 bezeichnet, dargestellt. Diese Plattform 10 bzw. Anordnung ermöglicht die sichere Übertragung von Informationen.

Die Plattform 10 umfasst eine Recheneinheit 12, in die eine Firewall 14, eine Nutzerverwaltung 16 und eine Signaturverwaltung 18 eingebunden sind. Verwaltet wird diese Recheneinheit 12 von einem Unternehmen 20 bzw. mehreren Unternehmen.

Als mögliche Eingangsgrößen liegen vor ein Zeitstempel 22, Bonitätsinformationen 24, Informationen von einem GPS-System 26, Informationen von einem Mobilfunktelefon 28, Informationen zu Details, wie Farbanpassung und 3D-Ansicht, 30, eine technische Authentifizierung 32, zusätzliche Informationen 34, Umgebungsinformationen, wie bspw. Wetterinformationen, 36 und Informationen von sog. location based services (LBS) 38.

Die Plattform 10 dient zur Erfassung von Content. Dieser Content wird mit weiteren Informationen (Wetter, Lokation, Uhrzeit, etc.) aufbereitet und den Kunden zur Verfügung gestellt.

Autorisierte Benutzer können Content über diese Plattform an registrierte Firmen übertragen. Die Zielgruppe ist daher weder bei den Usern noch bei den Firmen eingeschränkt. Der Datenfluss kann auch von den Firmen, wie bspw. Versicherungen, zurück zu den Benutzern erfolgen. Die erfindungsgemäße Plattform 10 ist aber auch in anderen Bereichen einsetzbar, in denen ein sicherer Austausch von Daten erfolgen muss.

Ein einfaches Erfassen von Content, z. B. eine Schadenmeldung, kann elektronisch an die Versicherung übertragen werden, ohne dass die ansonsten notwendigen Dokumente erforderlich sind. Über eine eindeutige ID kann sich der Benutzer an der Plattform 10 authentisieren. Dies erfolgt üblicherweise einmalig über eine Registrierung über das Internet, oder das Unternehmen, bspw. die Versicherung, sendet diese ID direkt an den Benutzer. Es ist somit eine einfache Übertragung der Daten über die Plattform 10 möglich.

Die Plattform 10 ermöglicht somit eine Automatisierung von bspw. Schadenmeldungen und eine Verifizierung der erhaltenen Daten mittels Plausibilitätschecks bzw. Überprüfung.

Jeder Benutzer kann über seine Mobiltelefonnummer oder E-Mail-Adresse authentisiert werden. Nach erfolgter Authentisierung wird die graphische Benutzeroberfläche (GUI) einschließlich der Nutzerinformationen (Name, User-ID usw.) zum Mobiltelefon übertragen. Die GUI passt sich dem Mobiltelefonmodell an und analysiert die zur reibungslosen Nutzung benötigten Parameter am Endgerät. Informationen werden gespeichert, es erfolgt eine Rücklieferung der Benutzerdaten vom Endgerät und ein Freischalten des Services durch Bestätigung an Nutzer.

Die Plattform 10 soll zur Erfassung von Content dienen. Autorisierte Benutzer können Content über diese Plattform 10 an registrierte Unternehmen übertragen. Die Zielgruppe ist daher weder bei den Benutzern noch bei den Unternehmen eingeschränkt. Der Datenfluss kann auch von den Unternehmen zurück zu den Benutzern erfolgen. Der Content wird mit weiteren Informationen (Wetter, Lokation, Uhrzeit usw.) angereichert. Weitere Daten können Auskunft geben zu: Was ist passiert? Wann? Wo? Schadenhöhe? Polizeibericht? Fotos? Beteiligte? Zeugen? etc.

Die eingegangenen Daten werden mit weiteren Daten aufgewertet, wie bspw. Wetter, Uhrzeit, Position. Dazu können vorhandene Lieferanten genutzt werden. Wetterinformationen können von gewerblichen Anbietern oder auch vom Deutschen Wetterdienst geliefert werden. Die Position kann von einem GPS-fähigen Mobiltelefon oder auch von der Basisstation, in der das Mobiltelefon eingeloggt war, also vom Provider bezogen werden.

Für jeden Kunden sollte ein extra Key (Schlüsselbit) angelegt und für ihn auf der Plattform 10 zur Verfügung gestellt.

Die Verschlüsselung aller eingegebenen Daten erfolgt dann bspw. durch eine XOR-Verknüpfung mittels des AES-Algorithmus (Advanced-Encryption-Standard-Algorithmus) eines jeden Nachrichtenbits mit dem entsprechenden Schlüsselbit (kundenspezifisch). Die einzelnen Nachrichtenteile werden dann zusammengefasst und über die Gesamtheit der Daten wird ein Hashwert (checksum) gelegt. Dieser wird mit den verschlüsselten Gesamtdaten übertragen und zeigt an, ob die Daten manipuliert wurden.

Da in der Natur verschiedene Regelmäßigkeiten nicht vorkommen, kann hier durch eine einfache Abtastung der Datei eine Manipulation nachgewiesen werden. So kann festgestellt werden, ob übermittelte Daten manipuliert wurden.

Die Daten werden üblicherweise anschließend an das jeweilige Unternehmen per FTP übertragen. Dabei erfolgt nur ein Prüfsummencheck.

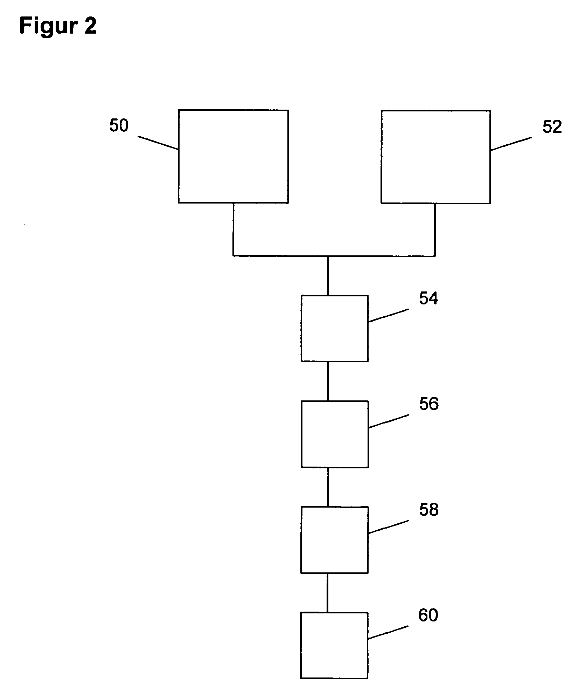

In Figur 2 ist ein möglicher Ablauf des erfindungsgemäßen Verfahrens dargestellt. In einem ersten Schritt 50 erfolgt die Aufnahme eines Schadens mittels der eingebauten Kamerafunktion eines Mobiltelefons. Dies können Ton-, Bild- oder auch andere Informationen sein.

Es werden dann in einem zeitgleich oder anschließend durchgeführten Schritt 52 weitere Daten, üblicherweise von dem Mobiltelefon, erfasst. Dies können Zeit-, Orts-, Wetterinformationen oder auch weitere Informationen sein. Alternativ oder ergänzend können weitere Daten von anderen Anbietern angefragt werden.

In einem Schritt 54 erfolgt eine Verknüpfung der in Schritt 50 erfassten Daten mit den in Schritt 52 erfassten Plausibilisierungsdaten. Die Art der Plausibilisierungsdaten ist dabei vorzugsweise der Situation angepasst vorab eingestellt. Die auf diese Weise verknüpften Daten werden dann in einem Schritt 56 von dem Benutzer mit seinem Mobilfunktelefon zu einem Dienstleister, der in der Regel die in Figur 1 dargestellte Plattform 10 betreibt, übertragen. Die Verknüpfung der Daten ermöglicht üblicherweise keine Manipulation der Daten.

Bei dem Dienstleister erfolgt anhand der Plausibilisierungsdaten in einem Schritt 58 eine Überprüfung der Daten. Dazu wird zunächst die Verknüpfung gelöst und dann anhand der Plausibilisierungsdaten überprüft, ob die übermittelten Daten, die in Schritt 52 erfasst wurden, einer tatsächlichen Begebenheit entsprechen. Hierbei kann auch überprüft werden, ob die Daten nachträglich manipuliert oder gar auf unzulässige Weise erzeugt wurden. So wird bspw. überprüft, ob die übermittelten Bilddaten Regelmäßigkeiten aufweisen, die in der Natur nicht vorkommen.

Anschließend werden die Daten mit einem entsprechenden Vermerk zum Wahrheitsgehalt der Daten in einem Schritt 60 zu einer Versicherung oder irgendeinem anderen Unternehmen übertragen. Dabei können die Daten mit zusätzlichen Plausibilisierungsdaten verknüpft werden. Die ursprünglich in Schritt 52 ermittelten Plausibilisierungsdaten können mit übersendet werden. Alternativ kann auch vorgesehen sein, dass lediglich der aufgrund dieser Plausibilisierungsdaten ermittelte Vermerk mit übersendet wird. Die in Schritt 60 übermittelten Daten sind manipulationssicher verknüpft. Bei dem empfangenden Unternehmen kann dann auch nur ein Prüfsummencheck erfolgen.

## Patentansprüche

1. Verfahren zur Verifikation von Daten, bei dem Daten erfasst und mit Plausibilisierungsdaten verknüpft werden und anschließend die Daten anhand der verknüpften Plausibilisierungsdaten verifiziert werden.

2. Verfahren nach Anspruch 1, bei dem die erfassten Daten und die Plausibiliserungsdaten zu einem vor Veränderungen gesicherten Datenpaket zusammengefasst werden.

3. Verfahren zur Verifikation von Daten nach Anspruch 1 oder 2, bei dem als Plausibilisierungsdaten Wetterdaten verwendet werden.

4. Verfahren nach einem der Ansprüche 1 bis 3, bei dem als Plausibilisierungsdaten Zeitdaten verwendet werden.

5. Verfahren nach einem der Ansprüche 1 bis 4, bei dem als Plausibilisierungsdaten Ortsdaten verwendet werden.

6. Verfahren zur Bearbeitung von Daten, bei dem Daten erfasst und mit Plausibilisierungsdaten verknüpft werden.

7. Verfahren zur Auswertung von mit Plausibilisierungsdaten verknüpften Daten, bei dem die Daten anhand der Plausibilisierungsdaten verifiziert werden.

8. Plattform zur Verifikation von Daten, insbesondere zur Durchführung eines Verfahrens nach einem der Ansprüche 1 bis 5, mit
einer Einheit zur Erfassung elektronischer Daten,
einer ersten Einrichtung zur Erzeugung von Plausibilisierungsdaten,
einer zweiten Einrichtung zur Verknüpfung der erfassten elektronischen Daten mit den Plausibilisierungsdaten, und
einer Recheneinrichtung zur Verifikation der erfassten Daten anhand der mit diesen verknüpften Plausibilisierungsdaten.

9. Plattform nach Anspruch 8, die eine offene Schnittstelle zu Kunden bereitstellt.

10. Vorrichtung zur Erfassung elektronischer Daten, insbesondere zur Durchführung eines Verfahrens nach Anspruch 6, mit
einer Einheit zur Erfassung elektronischer Daten,
einer ersten Einrichtung zur Erzeugung von Plausibilisierungsdaten, und
einer zweiten Einrichtung zur Verknüpfung der erfassten elektronischen Daten mit den Plausibilisierungsdaten.

11. Vorrichtung zur Auswertung erfasster Daten, insbesondre zur Durchführung eines Verfahrens nach Anspruch 7, mit einer Recheneinrichtung zur Verifikation der erfassten Daten anhand von mit diesen verknüpften Plausibilisierungsdaten.

12. Computerprogramm mit Programmcodemitteln, um alle Schritte eines Verfahrens nach einem der Ansprüche 1 bis 7 durchzuführen, wenn das Computerprogramm auf einem Computer oder einer entsprechenden Recheneinheit ausgeführt wird.

13. Computerprogrammprodukt mit Programmcodemitteln, die auf einem computerlesbaren Datenträger gespeichert sind, um alle Schritte eines Verfahrens nach einem der Ansprüche 1 bis 7 durchzuführen, wenn das Computerprogramm auf einem Computer oder einer entsprechenden Recheneinheit ausgeführt wird.

## Geänderte Patentansprüche

### Geänderte Patentansprüche gemäss Regel 137(2) EPÜ.

**1.** Verfahren zur Verifikation von Daten, bei dem Daten erfasst und mit Plausibilisierungsdaten verknüpft werden und anschließend die Daten anhand der verknüpften Plausibilisierungsdaten verifiziert werden, wobei die erfassten Daten und die Plausibiliserungsdaten zu einem vor Veränderungen gesicherten Datenpaket zusammengefasst werden und damit in einen gesicherten und ggf. unveränderbaren Zustand versetzt werden.

**2.** Verfahren zur Verifikation von Daten nach Anspruch 1, bei dem die verknüpften Daten mittels eines AES-Algorithmus und eines individuellen Hex Codes verschlüsselt werden.

**3.** Verfahren nach Anspruch 1, bei dem eine Verschlüsselung aller Daten durch eine XOR-Verknüpfung mittels eines AES-Algorithmus eines jeden Nachrichtenbits mit einem entsprechenden Schlüsselbit erfolgt, wobei die einzelnen Nachrichtenteile zusammengefasst werden und über die Gesamtheit der Daten ein Hash-Wert gelegt wird, der mit den verschlüsselten Daten übertragen wird und anzeigt, ob die Daten manipuliert werden.

**4.** Verfahren zur Auswertung von mit Plausibilisierungsdaten verknüpften Daten, bei dem die Daten anhand der Plausibilisierungsdaten verifiziert werden, wobei die Daten und die Plausibiliserungsdaten zu einem vor Veränderungen gesicherten Datenpaket zusammengefasst und damit in einen gesicherten und ggf. unveränderbaren Zustand versetzt sind.

**5.** Plattform zur Verifikation von Daten, insbesondere zur Durchführung eines Verfahrens nach einem der Ansprüche 1 bis 5, mit
einer Einheit zur Erfassung elektronischer Daten,
einer ersten Einrichtung zur Erzeugung von Plausibilisierungsdaten,
einer zweiten Einrichtung zur Verknüpfung der erfassten elektronischen Daten mit den Plausibilisierungsdaten, so dass die erfassten Daten und die Plausibiliserungsdaten zu einem vor Veränderungen gesicherten Datenpaket zusammengefasst werden und damit in einen gesicherten und ggf. unveränderbaren Zustand versetzt sind, und
einer Recheneinrichtung zur Verifikation der erfassten Daten anhand der mit diesen verknüpften Plausibilisierungsdaten.

**6.** Plattform nach Anspruch 5, bei der als Eingangsgröße eine technische Authentifizierung vorgesehen ist.

**7.** Plattform nach Anspruch 5 oder 6, die eine offene Schnittstelle zu Kunden bereitstellt.

**8.** Vorrichtung zur Erfassung elektronischer Daten, mit
einer Einheit zur Erfassung elektronischer Daten,
einer ersten Einrichtung zur Erzeugung von Plausibilisierungsdaten, und
einer zweiten Einrichtung zur Verknüpfung der erfassten elektronischen Daten mit den Plausibilisierungsdaten, so dass die erfassten Daten und die Plausibiliserungsdaten zu einem vor Veränderungen gesicherten Datenpaket zusammengefasst und damit in einen gesicherten und ggf. unveränderbaren Zustand versetzt sind.

**9.** Vorrichtung nach Anspruch 8, bei der die Plausibilisierungsdaten und die erfassten Daten mittels eine AES-Algorithmus und eines 19-stelligen Hex Codes verschlüsselt werden.

**10.** Vorrichtung zur Auswertung erfasster Daten, mit
einer Recheneinrichtung zur Verifikation der erfassten Daten anhand von mit diesen verknüpften Plausibilisierungsdaten, wobei die erfassten Daten und die Plausibiliserungsdaten zu einem vor Veränderungen gesicherten Datenpaket zusammengefasst und damit in einen gesicherten und ggf. unveränderbaren Zustand versetzt sind.

**11.** Computerprogramm mit Programmcodemitteln, um alle Schritte eines Verfahrens nach einem der Ansprüche 1 bis 5 durchzuführen, wenn das Computerprogramm auf einem Computer oder einer entsprechenden Recheneinheit ausgeführt wird.

**12.** Computerprogrammprodukt mit Programmcodemitteln, die auf einem computerlesbaren Datenträger gespeichert sind, um alle Schritte eines Verfahrens nach einem der Ansprüche 1 bis 5 durchzuführen, wenn das Computerprogramm auf einem Computer oder einer entsprechenden Recheneinheit ausgeführt wird.
